# EUROPEAN PATENT APPLICATION

(11) **EP 2 876 327 A2**
(43) Date of publication of application: **27.05.2015**
(21) Application number: 14184165.0
(22) Date of filing: 09.09.2014
(51) Int. Cl.: F16F 1/02

(54) **Isolators having nested flexure devices and methods for the production thereof**

(30) Priority: 26.11.2013 US 201314090749
(71) Applicant: Honeywell International Inc., Morristown, NJ 07962-2245 (US)
(72) Inventor: Smith, Ben, Morristown, NJ New Jersey 07962-2245 (US); Buchele, Paul, Morristown, NJ New Jersey 07962-2245 (US); Witwer, Kevin, Morristown, NJ New Jersey 07962-2245 (US)
(74) Representative: Houghton, Mark Phillip

(57) **Abstract**

Embodiments of an isolator (10) having a nested flexure device (12) are provided, as are embodiments of a nested flexure device and methods for the production thereof. In one embodiment, the isolator includes an isolator body (16) and a nested flexure device mounted to an end portion of the isolator body. The nested flexure device includes an inner flexure array (82) compliant along first and second perpendicular axes orthogonal to the working axis of the isolator. The nested flexure device further includes an outer flexure array (80) compliant along the first and second perpendicular axes, coupled in series with the inner flexure array, and circumscribing at least a portion of the inner flexure array.

## Description

### STATEMENT REGARDING FEDERALLY-SPONSORED RESEARCH OR DEVELOPMENT

This invention was made with Government support under Government Contract # FA8721-05-C-0002 awarded by MIT_Lincoln Labs. The Government has certain rights in the invention.

### TECHNICAL FIELD

The present invention relates generally to flexures and, more particularly, to embodiments of a nested flexure device well-suited for usage within axially-damping isolators, as well as to methods for producing nested flexure devices.

### BACKGROUND

Single degree-of-freedom ("DOF"), axial isolators are commonly produced to include flexure devices to accommodate angular or rotational misalignments between the mount points of the isolator. Ideally, such flexure devices are characterized by relatively low radial stiffnesses to provide the desired angular compliance, as well as a relatively high axial stiffness to avoid detracting from isolator performance. In contrast to ball joints, flexure devices eliminate play between joints and are consequently well-suited for incorporation into isolators utilized to attenuate low amplitude vibrations, such as jitter. Conventional flexure devices are, however, limited in certain respects. For example, the angular range of motion ("ROM") of a flexure device is typically limited by flexure length. As the length of the flexure device decreases, stress concentrations within compliant portions of the flexure device (e.g., the rectangular beams of a blade-type flexure device) increase. In applications wherein the flexure device is required to be highly compact in an axial direction, the angular ROM of the flexure device may be undesirably restricted by high stress concentrations and material strength limitations. While it may be possible to increase the angular ROM by fabricating the flexure device from an exotic alloy having an exceptionally high material strength, such alloys tend to be costly and may still only permit a relatively modest increase in the angular ROM of the flexure device.

It is thus desirable to provide embodiments of a flexure device that is relatively compact in an axial direction and that provides a relatively broad angular ROM, while minimizing stress concentrations within the compliant portions of the flexure device. Ideally, embodiments of such an axially-compact flexure device would be well-suited for usage in a single DOF, axially-damping isolator, but could also be utilized in various other applications wherein it is desired to provide angular compliancy between mount points, while transmitting axial forces therebetween. Finally, it would further be desirable to provide embodiments of single DOF isolator including such an axially-compact flexure device, as well as embodiments of a method for producing such a flexure device. Other desirable features and characteristics of embodiments of the present invention will become apparent from the subsequent Detailed Description and the appended Claims, taken in conjunction with the accompanying drawings and the foregoing Background.

### BRIEF SUMMARY

Embodiments of an isolator having a nested flexure device are provided. In one embodiment, the isolator includes an isolator body and a nested flexure device mounted to an end portion of the isolator body. The nested flexure device includes inner and outer flexure arrays, which are each compliant along first and second perpendicular axes orthogonal to the working axis of the isolator. The outer flexure array is coupled in series with the inner flexure array and circumscribes at least a portion thereof.

Embodiments of a nested flexure device having a longitudinal axis are further provided. In one embodiment, the nested flexure device includes an inner flexure array compliant along first and second perpendicular axes orthogonal to the longitudinal axis. The nested flexure device further includes an outer flexure array compliant along the first and second perpendicular axes, coupled in series with the inner flexure array, and circumscribing at least a portion of the inner flexure array.

Embodiments of a method for producing a nested flexure device are still further provided. In one embodiment, the method includes providing a resilient structure having a longitudinal axis, an inner annular sidewall extending around the longitudinal axis, and an outer annular sidewall circumscribing at least a portion of the inner annular sidewall. An inner flexure array is formed in the inner annular sidewall and is compliant along first and second perpendicular axes orthogonal to the longitudinal axis. An outer flexure array is formed in the outer annular sidewall, compliant along the first and second perpendicular axes, and coupled in series with the inner flexure array.

### BRIEF DESCRIPTION OF THE DRAWINGS

At least one example of the present invention will hereinafter be described in conjunction with the following figures, wherein like numerals denote like elements, and:
FIG. 1 is a cross-sectional view of a single DOF, axial isolator including a nested flexure device, as illustrated in accordance with an exemplary embodiment of the present invention;
FIGs. 2, 3, 4, and 5 are isometric, top-down, first side, and second side views, respectively, of the exemplary nested flexure device shown in FIG. 1;
FIGs. 6-9 are cross-sectional views of the exemplary nested flexure device shown in FIGs. 1-5 and taken along various cut planes to more clearly illustrate the internal structure of the flexure device; and
FIGs. 10 and 11 are isometric and cross-sectional views, respectively, illustrating the nested flexure device shown in FIGs. 1-9 at various stages of manufacture, as produced in accordance with an exemplary embodiment of a method for manufacturing a nested flexure device.

### DETAILED DESCRIPTION

The following Detailed Description is merely exemplary in nature and is not intended to limit the invention or the application and uses of the invention. Furthermore, there is no intention to be bound by any theory presented in the preceding Background or the following Detailed Description.

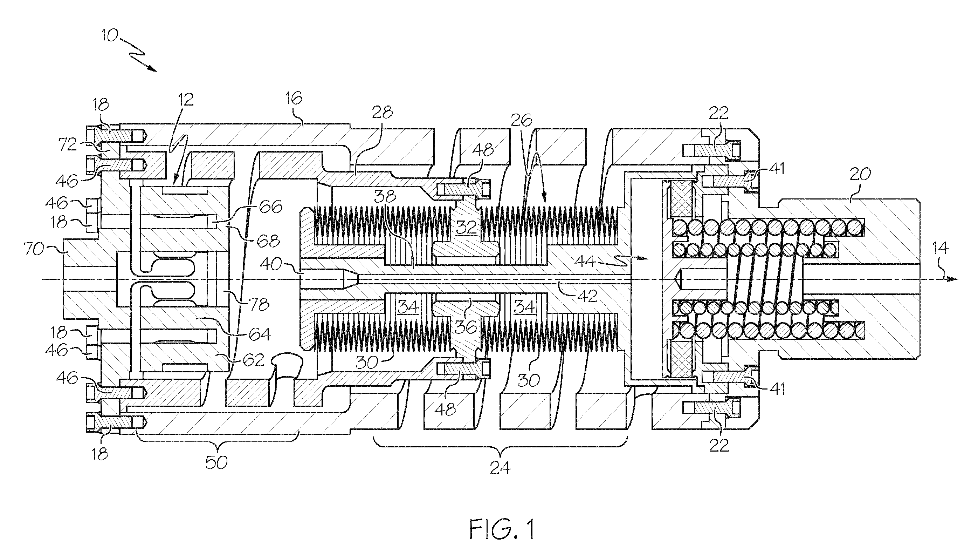

FIG. 1 is a cross-sectional view of an isolator **10** including a nested flexure device **12,** as illustrated in accordance with an exemplary embodiment of the present invention. In this case, isolator **10** is a three parameter device that behaves, at least in part, as a primary spring coupled in parallel with a series-coupled secondary spring and damper. Isolator **10** may also be described as a single DOF, axially-damping device having a working axis **14,** which may be co-axial with the longitudinal axis of flexure device **12.** Isolator **10** is well-suited for usage in a multi-point mounting arrangement; e.g., isolator **10** can be combined with a number of like isolators in, for example, a hexapod or octopod-type mounting arrangement to provide high fidelity damping in six degrees of freedom. Such multi-point mounting arrangements are usefully employed in spacecraft isolation systems utilized to attenuate vibrations or impact forces transmitted between a spacecraft and a payload carried by the spacecraft. The instant example notwithstanding, it is emphasized that embodiments of nested flexure device **12** can be integrated into various other types of isolators, such as other three parameter isolators and two parameter isolators (e.g., tuned-mass dampers), utilized within terrestrial, waterborne, airborne, and space-borne applications. More generally, flexure device **12** need not be incorporated into an isolator in all embodiments and may instead be utilized within various other applications or platforms wherein it is desired to transmit axial forces between mount points, while providing a relatively high degree of rotational compliancy therebetween.

Three parameter isolator **10** includes an elongated, tubular isolator body **16.** Nested flexure device **12** is mounted to a first end of isolator body **16** utilizing, for example, a plurality of bolts **18**. An axially-projecting end piece **20** is attached to the opposing end of isolator body **16** utilizing an additional set of bolts **22.** Nested flexure device **12** and axially-projecting end piece **20** thus serve as opposing mechanical inputs/outputs of isolator **10.** When isolator **10** is installed within a given application, nested flexure device **12** and end piece **20** may be attached to first and second mount points, respectively, utilizing hardware (e.g., utilizing bolts, clamps, brackets, etc.), by bonding (e.g., by welding or soldering), and/or utilizing other attachment means. When isolator **10** is employed within a spacecraft isolation system, specifically, either nested flexure device **12** or end piece **20** may be affixed to the spacecraft body, while the other of flexure device **12** and end piece **20** is affixed to a payload support structure, such as an optical bench. An outer machined spring **24** is formed in an intermediate portion of isolator body **16;** e.g., machined spring **24** may be cut into body **16** utilizing a laser cutting or an Electrical Discharge Machining ("EDM") wire process. As will be described below, outer machined spring **24** may serve as the main spring of three parameter isolator **10;** however, in further embodiments, a discrete coil spring may be integrated into isolator **10** and utilized for this purpose.

A damper assembly **26** is housed within tubular isolator body **16.** Damper assembly **26** includes opposing bellows **30** and a disc-shaped damper piston **32,** which is resiliently suspended between bellows **30.** Opposing hydraulic chambers **34** are defined, in part, by bellows **30** and piston **32.** Chambers **34** are fluidly coupled by an annulus **36** further defined by damper piston **32** and an elongated rod **38,** which extends through a central opening provided in piston **32** and through bellows **30.** Chambers **34** are fluid-tight and configured to sealingly contain a damping fluid, such as a silicone-based damping fluid. Isolator **10** may be initially produced and distributed without damping fluid, which may later be introduced into hydraulic chambers **34** prior to usage of isolator **10;** e.g., as indicated in FIG. 1, the damping fluid may be directed into hydraulic chambers **34** through a fill port **40,** which is fluidly coupled to chambers **34** via a flow passage **42** provided in rod **38.** As damper piston **32** strokes during operation of isolator **10,** bellows **30** expand and contract, the respective volumes of hydraulic chambers **34** increase and decrease, and damping fluid is forced through restricted annulus **36** to provide the desired damping effect. If desired, a spring-biased thermal compensation device **44** (commonly referred to as a "thermal compensator") may further be fluidly coupled to chambers **34** via flow passage **42** to pressurize the damping fluid held within chambers **34** and to help compensate for thermally-induced fluctuations in damping fluid volume occurring during operation of isolator **10.**

A tubular inner spring structure **28** is further housed within tubular isolator body **16** and may be substantially co-axial therewith. Inner spring structure **28** is mechanically coupled between damper assembly **26** and nested flexure device **12.** For example, as shown in FIG. 1, a first end of inner spring structure **28** may be attached to nested flexure device **12** by a first set of bolts **46,** while the opposing end of structure **28** may be attached to an outer circumferential portion of damper piston **32** by a second set of bolts **48.** To help impart isolator **10** with an axially-compact form factor, nested flexure device **12** extends into a first end portion of inner spring structure **28,** while one of bellows **30** and part of damper piston **32** extends into the opposing end portion of spring structure **28.** An inner machined spring **50** is cut into or otherwise formed within inner spring structure **28** and serves as the secondary or tuning spring of isolator **10,** as described more fully below.

With continued reference to the exemplary embodiment shown in FIG. 1, two parallel load paths are provided through isolator **10:** (i) a first load path, which extends from nested flexure device **12,** through isolator body **16** (and therefore through outer machined spring **24),** and to axially-projecting end piece **20;** and (ii) a second load path, which extends from nested flexure device **12,** through inner spring structure **28** (and therefore through inner machined spring **50),** through damper assembly **26,** through thermal compensator **44,** and to end piece **20.** Isolator **10** thus comprises a three parameter device including a main spring (outer machined spring **24),** which is coupled in parallel with a series-coupled secondary spring (inner machined spring **50)** and a damper (damper assembly **26).** As compared to other types of passive isolators, such as two parameter viscoelastic isolators, three parameter isolators provide superior attenuation of high frequency, low amplitude vibratory forces, such as jitter. Further discussion of three parameter isolators can be found in U.S. Pat. No. 5,332,070, entitled "THREE PARAMETER VISCOUS DAMPER AND ISOLATOR," issued January 26, 1984; and U.S. Pat. No. 7,182,188 B2, entitled "ISOLATOR USING EXTERNALLY PRESSURIZED SEALING BELLOWS," issued February 27, 2007; both of which are assigned to assignee of the instant application.

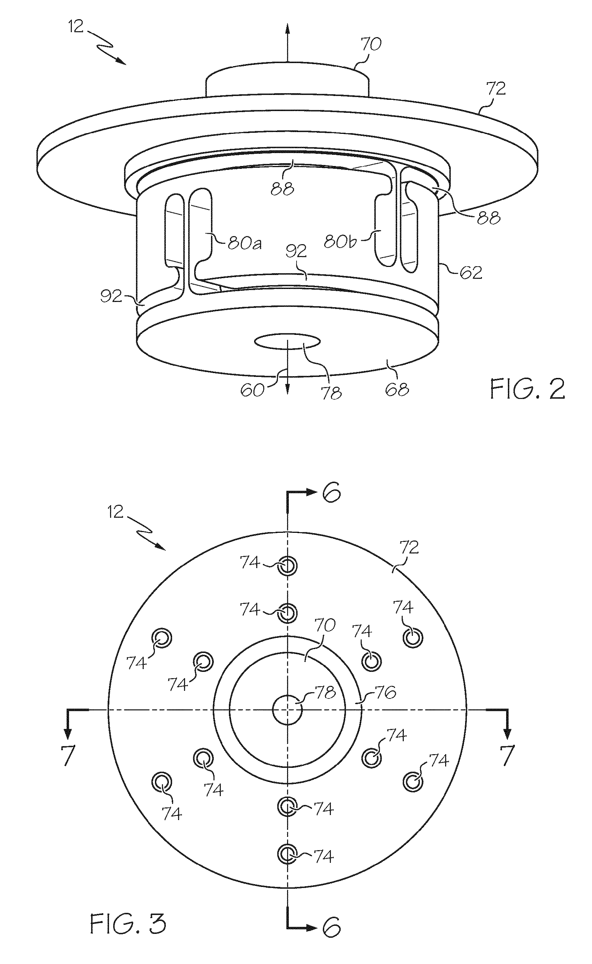

In certain instances, packaging constraints may require nested flexure device **12** to have an axially-compact form factor and, specifically, a relatively low length-to-diameter ratio; e.g., a length-to-diameter ratio less than 1:1. At the same time, it may be desirable for flexure device **12** to provide a relatively large angular ROM, such as angular ROM approach or exceeding 8°, while minimizing stress concentrations within device **12.** Most, if not all, conventional flexure devices are incapable of providing such a large angular ROM in such an axially-compact envelope due to undesirably high stress concentrations occurring within the flexure device, which can prematurely limit the operational lifespan of the device. In contrast, nested flexure device **12** is able to satisfy both of these competing criteria. As a further advantage, nested flexure device **12** also helps minimize the overall axial length of isolator **10** due to the manner in which device **12** is recessed within tubular isolator body **16** and secondary spring structure **28**. The manner in which nested flexure device **12** is able to provide such an axially-compact form factor and a relatively broad angular ROM will now be discussed in conjunction with FIGs. 2-9.

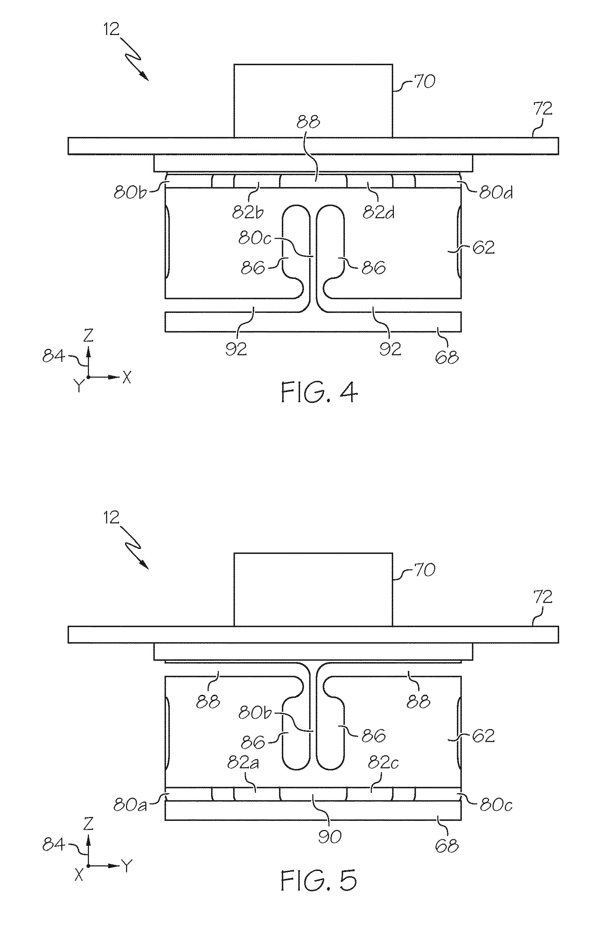

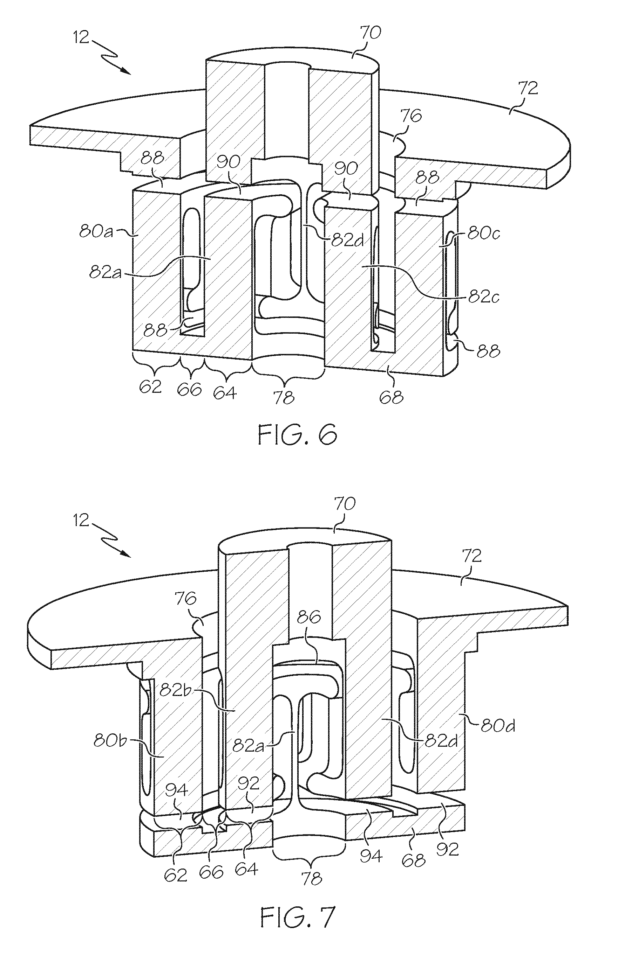

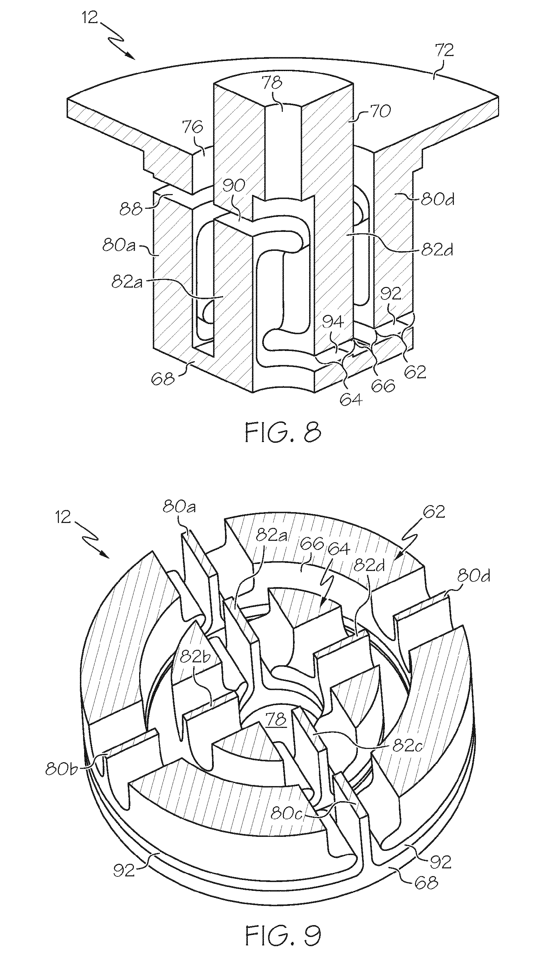

FIGs. 2, 3, and 4 are isometric, top-down, and side views of nested flexure device **12,** respectively, illustrating device **12** in greater detail. FIG. 5 also provides a side view of nested flexure device **12,** but rotated by 90° about the longitudinal axis of device **12** (represented by line **60** in FIG. 2) relative to the side view shown in FIG. 4. FIGs. 6 and 7 illustrated nested flexure device **12** in cross-section, as taken along lines 6-6 and 7-7, respectively, identified in FIG. 3. FIG. 8 likewise illustrates a cross-sectional view of nested flexure device **12,** as taken along bent line 6-7 in FIG. 3 such that only one quarter of device **12** is shown. Finally, FIG. 9 provides a still further cross-sectional view of nested flexure device **12,** as taken along a plane orthogonal to longitudinal axis **60** (FIG. 2) and extending through the below-described blades flexures of device **12.** The following description refers to FIGs. 2-9 collectively in discussing the illustrated embodiment of nested flexure device **12** due to the relatively complexity of the internal structure of device **12.** For ease of description, terms such as "upper," "lower," and the like may be utilized in reference to the illustrated orientation of nested flexure device **12** shown in FIGs. 2-9; it will be appreciated, however, that the depicted orientation of device **12** is arbitrary and that device **12** can function in any orientation in three dimensional space.

Nested flexure device **12** includes an outer annular structure or sidewall **62** (FIGs. 2 and 4-9) and an inner annular structure or sidewall **64** (FIGs. 6-9). As shown most clearly in FIGs. 6-9, outer annular sidewall **62** circumscribes or extends around at least a portion of and preferably the substantial entirety of inner annular sidewall **64.** Annular sidewalls **62** and **64** further extend around longitudinal axis **60** of nested flexure device **12** (FIG. 2) such that sidewalls **62** and **64** are substantially concentric. Annular sidewalls **62** and **64** are joined at their lower ends by a disc-shaped endwall or base plate **68** (FIGs. 2 and 4-9). Annular sidewalls **62** and **64** are further radially spaced apart by a circumferential clearance or annular gap **66** (FIGs. 6-9). As indicated in FIGs. 6-9, annular gap **66** (referred to more simply below as "annulus **66")** may be concentric with the longitudinal axis **60** of nested flexure device **12** (FIG. 2), penetrate the upper end of device **12,** and terminate at base plate **68.** Base plate **68** thus spans or extends across annulus **66** to physically join annular sidewalls **62** and **64.** Annulus **66** may be considered a blind annular or tubular bore, which is axially bound at one end by the inner radial face of base plate **68** and circumferentially bound by the inner circumferential surface of outer annular sidewall **62** and the outer circumferential surface of inner annular sidewall **64.** As will be described more fully below, annulus **66** provides sufficient circumferential clearance to allow outer inner annular sidewall **64** to tilt with respect with outer annular sidewall **62** without physical contact occurring therebetween.

A radial flange **72** (FIGs. 2-8) projects from the upper edge of outer annular sidewall **62.** Radial flange **72** includes a central opening **76,** which may be an extension of annulus **66.** An axial extension **70** (FIGs. 2-8) is joined to inner annular sidewall **64** and extends axially therefrom through opening **76** in a direction away from radial flange **72,** inner annular sidewall **64,** base plate **68,** and the other components of flexure device **12.** Radial flange **72** and axial extension **70** serve as the attachment points of nested flexure device **12.** When nested flexure device **12** is installed within isolator **10** shown in FIG. 1, radial flange **72** may be bolted or otherwise attached to tubular isolator body **16** and the secondary spring structure **28** housed therein in the previously-described manner. In this regard, radial flange **72** may be fabricated to include a number of fastener openings **74** (shown in FIG. 3 only) to facilitate attachment of nested flexure device **12** to isolator body **16** and inner spring structure **28.** A longitudinal channel **78** (FIGs. 2, 3 and 6-9) is further provided through nested flexure device **12** and defines the inner circumferential surface of inner annular sidewall **64.** In the illustrated example, channel **78** extends through base plate **68** and through axial extension **70;** and is co-axial with longitudinal axis **60** of nested flexure device **12** (FIG. 2), inner annular sidewall **64,** outer annular sidewall **62,** and annulus **66.**

Nested flexure device **12** further includes an outer flexure system or array **80** (FIGs. 2 and 4-9) and an inner flexure system or array **82** (FIGs. 4-9). Outer flexure array **80** circumscribes or extends around at least a portion of inner flexure array **82.** Inner flexure array **82** may thus be described as surrounded by, encircled by, or nested within outer flexure array **80.** Outer flexure array **80** and inner flexure array **82** are coupled in series, as taken along one or more load paths through nested flexure device **12** extending between the attachment points of device **12;** i.e., radial flange **72** and axial extension **76.** Additionally, outer flexure array **80** and inner flexure array **82** are each compliant along at least one axis perpendicular to longitudinal axis **60** of nested flexure device **12** (FIG. 2) and, therefore, perpendicular to working axis **14** of isolator **10** (FIG. 1). As appearing herein, reference to a flexure or flexure array as "compliant" along a first axis denotes that the flexure or flexure array has a stiffness along the first axis that is less than the stiffness of the flexure or flexure array along a second axis perpendicular to the first axis. In preferred embodiments, outer flexure array **80** and inner flexure array **82** are each radially compliant; that is, compliant along first and second perpendicular axes orthogonal to longitudinal axis **60** of nested flexure device **12** and working axis **14** of isolator **10** (identified as axes "X" and "Y" by coordinate legend **84** in FIGs. **4** and 5). At the same time, it is preferred that flexure arrays **80** and **82** are each relatively stiff or rigid in an axial direction; that is, as taken along longitudinal axis **60** of device **12** and working axis **14** of isolator **10** (identified as axis "Z" by the coordinate legend **84).**

Outer flexure array **80** includes a number of flexures **80(a)-(d)** formed in outer annular sidewall **62** and circumferentially spaced about longitudinal axis **60** of nested flexure device **12** (FIG. 2). Similarly, inner flexure array **82** includes a number of flexures **82(a)-(d)** formed in inner annular sidewall **64** and circumferentially-spaced about longitudinal axis **60.** As identified in FIGs. 4 and 5, flexures **80(a)-(d)** and flexures **82**(**a**)-**(d)** are defined by openings **86** cut into or otherwise formed through sidewalls **62** and **64,** respectively. A number of curved slots or arcuate grooves **88, 90, 92,** and **94** are also cut into or otherwise formed in outer sidewall 62 and inner sidewall **64** to further define flexures **80(a)-(d)** and flexures **82(a)-(d).** For example, and as shown most clearly in FIGs. 6 and 8, arcuate grooves **88** and **90** may be cut into upper portions of outer annular sidewall **62** and inner annular sidewall **64,** respectively. Specifically, a pair of grooves **88** may be cut into an upper portion of outer annular sidewall **62** proximate the underside of flange **72;** while a pair of grooves **90** may be cut into an upper portion of inner annular sidewall **64** proximate the inner end of axial extension **70.** Furthermore, grooves **88** and **90** may be radially aligned and produced utilizing a common cutting operation, such as the EDM wire process described below. Additionally, as shown most clearly in FIGs. 7 and 8, two pairs of arcuate grooves **92** and **94** may be cut into lower portions of outer sidewall **62** and inner sidewall **64,** respectively. Lower arcuate grooves **92** and **94** may be located immediately above base plate **68** and may also align, as taken along different radii of nested flexure device **12.**

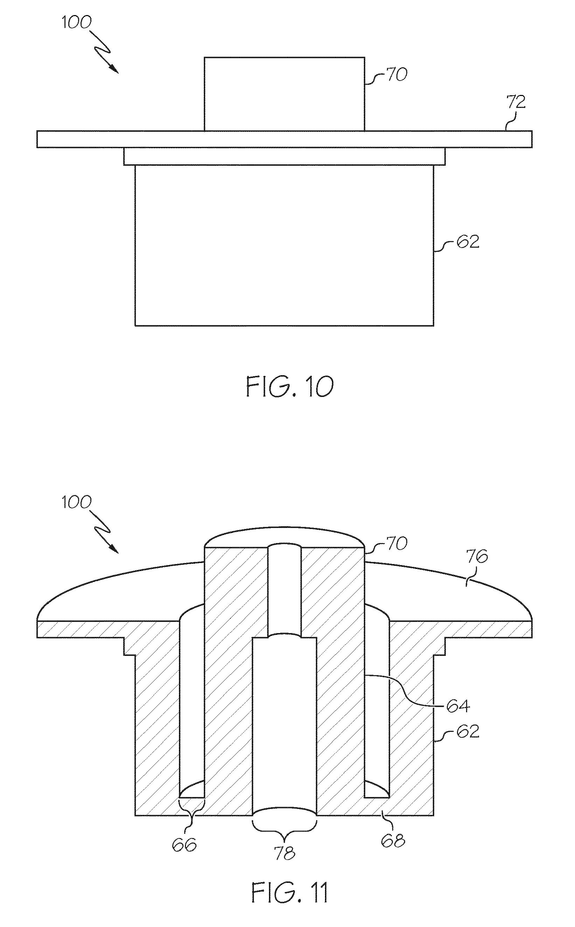

With continued reference to the exemplary embodiment shown in FIGs. 2-9, outer flexure array **80** includes a total of four flexures **80(a)-(d),** which may be evenly spaced about longitudinal axis **60** of nested flexure device **12** at 90° intervals. Inner flexure array **82** likewise includes a total of four flexures **82(a)-(d),** which are also evenly spaced about axis **60** at 90° intervals. In alternative embodiments, outer flexure array **80** and/or inner flexure array **82** may include fewer or a greater number of flexures, which may or may not be spaced about axis **60** at regular intervals. Furthermore, flexure arrays **80** and **82** need not include the same number or type of flexures in all embodiments. As shown most clearly in FIGs. 4-9, each flexure **80(a)-(d)** included within outer flexure array **80** aligns radially (that is, aligns as taken along a radius of nested flexure device **12)** with one of flexures **82(a)-(d)** included within inner flexure array **82.** In particular, outer flexure **80**(**a**) aligns radially with inner flexure **82**(**a**), outer flexure **80(b)** aligns radially with inner flexure **82(b),** and so on. Such radial alignment between the flexures of arrays **80** and **82** allows simultaneous formation of the flexures utilizing a common cutting operation, such as an EDM wire process of the type described in conjunction with FIGs. 10 and 11. This notwithstanding, the flexures of array **80** need not align radially with the flexures of array **82** in all embodiments; e.g., in embodiments wherein arrays **80** and **82** are formed in different pieces, which are subsequently assembled to produce nested flexure device **12,** outer flexure array **80** may be clocked with respect to inner flexure array **82** by, for example, a 45° angle as taken about longitudinal axis **60** of device **12** (FIG. 2).

In the illustrated example, flexures **80(a)-(d)** of array **80** and flexures **82(a)-(d)** of array **82** are blade flexures, which have a rectangular cross-sectional geometry (shown most clearly in FIG. 9). Such blade flexures have a high column stiffness (that is, have a high stiff in an axial direction) and are consequently well-suited for transmitting axial forces through device **12.** Additionally, the blade flexures have a relatively high cross-sectional stiffness as taken along a first axis (that is, as taken through their major cross-sectional dimension or width); while having a relatively low cross-sectional stiffness or high compliancy as taken along a second axis perpendicular to the first axis, as taken through their minor cross-sectional dimension (that is, as taken through their thickness). Due to their relative positioning around longitudinal axis **60** (FIG. 2) and their respective orientations, certain flexures in arrays **80** and **82** are compliant along a first axis perpendicular to longitudinal axis **60** (FIG. 2) and working axis **14** of isolator **10** (FIG. 1), while other flexures in arrays **80** and **82** are compliant along a second axis perpendicular to longitudinal axis **60** and working axis **14.** In particular, a first subset of the flexures included within array **80** (flexures **80**(**a**) and **80(c))** and a first subset of flexures included within array **82** (flexures **82(a)** and **82(c))** are compliant along a first axis orthogonal to longitudinal axis **60** and working axis **14,** namely, the X-axis identified in FIGs. 4 and 5 by coordinate legend **84.** Similarly, a second subset of the flexures included within array **80** (flexures **80(b)** and **80(d))** and a second subset of flexures included within array **82** (flexures **82(b)** and **82(d))** are compliant along a second axis orthogonal to longitudinal axis **60** and working axis **14,** namely, the Y-axis identified by coordinate legend **84**.

Flexure arrays **80** and **82** each contain flexures that are compliant along the same axis and coupled in series, as taken along a load path through nested flexure device **12.** For example, flexure **80**(**a**) of outer flexure array **80** and flexure **82(a)** of inner flexure array **82** are coupled in series and have their greatest compliancy along the X-axis identified in FIGs. 4 and 5. Flexure **80(c)** of array **80** and flexure **82(c)** of array **82** are likewise coupled in series and have their greatest compliancy along the X-axis identified in FIGs. 4 and 5. Similarly, flexure **80**(**b**) of array **80** and flexure **82(b)** of array **82** are coupled in series and have their greatest compliancy along the Y-axis identified in FIGs. 4 and 5. Finally, flexure **80(d)** of array **80** and flexure **82(d)** of array **82** are further coupled in series and have their greatest compliancy along the Y-axis in FIGs. 4 and 5. Stated differently, outer flexure array **80** has a first subset of blade flexures (flexures **80**(**a**) and **80(c))** oriented to have a higher compliancy along a first axis perpendicular to working axis **60** (e.g., the X-axis in FIGs. 4 and 5) than along a second axis perpendicular to the first axis (e.g., the Y-axis in FIGs. 4 and 5), and a second subset of blade flexures (flexures **80(b)** and **80(d))** oriented to have a higher compliancy along the second axis than along the first axis. Inner flexure array **82** likewise includes a first subset of blade flexures (flexures **82(a)** and **82(c))** oriented to have a higher compliancy along the first axis than along the second axis, and a second subset of blade flexures (flexures **82(b)** and **82(d))** oriented to have a higher compliancy along a second axis than along the first axis. Furthermore, the first subset of blade flexures included within inner flexure array **82** is coupled in series with the first subset of blade flexures included within outer flexure array **80,** and wherein the second subset of blade flexures included within inner flexure array **82** is coupled in series with the second subset of blade flexures included within outer flexure array **80.**

As a result of the above-described structural configuration, rotational misalignments about perpendicular axes orthogonal to longitudinal axis **60** (i.e., the X-and Y-axes in FIGs. 4 and 5) are shared substantially equally between the flexures of outer flexure array **80** and the flexures of inner flexures array **82**. The series-coupled flexures of arrays **80** and **82** thus effectively act as single array of flexures having a length twice that of any given flexure within arrays **80** and **82** thereby reducing stress concentrations within the compliant regions of flexure device **12.** This, in turn, allows the angular ROM of nested flexure device **12** to be maximized and, possibly, to approach or exceed 8° in at least some cases. Furthermore, the overall axial length of device **12** can be minimized due to the manner in which inner flexure array **82** is nested within outer flexure array **80;** e.g., in one embodiment, the axial length of device **12** is less than the diameter thereof. It will also be noted that, due to the nested design of device **12,** any given load path through device **12** will have a substantially sinusoidal or undulating portion or segment extending through outer flexure array **80,** base plate **68,** and inner flexure array **82.** Bending of the flexures included within arrays **80** and **82** thus allows relative rotational displacement or tilting between end piece **70,** inner annular sidewall **64,** base plate **68,** outer annular sidewall **62,** and radial flange **72** during rotational or angular deflection of nested flexure device **12** to impart device **12** with a relatively broad angular ROM.

Nested flexure device **12** can be produced from multiple discrete components, which are assembled to produce device **12;** e.g., inner annular sidewall **64,** inner flexure array **82,** and axial extension **70** may be produced as a first machined piece, which seats within and is affixed (e.g., welded) to a second machined piece including outer annular sidewall **62,** outer flexure array **80,** radial flange **72,** and base plate **68.** However, in preferred embodiments, nested flexure device **12** is produced as a monolithic structure or single piece. In this case, fabrication of nested flexure device **12** may commence with the provision of a monolithic body of resilient material, such as a length of bar stock. The resilient body of material may then be machined to a near net shape utilizing, for example, a lathing process. FIG. 11 illustrates such a monolithic body of resilient material **100** (referred to hereafter as "resilient body **100")** after external machining to generally define the outer circumferential surface of outer annular sidewall **62,** radial flange **72,** and axial extension **70.** In one embodiment, resilient body **100** is composed of a resilient metal or alloy, such as a titanium alloy.

Next, additional material removal processes may be carried-out to produce longitudinal channel **78** through resilient body **100** and annulus **66,** as generally shown in FIG. 12. For example, one or more drilling or lathing processes may be utilized to produce channel **78** and thereby define the inner circumferential wall of inner annular sidewall **60;** while an EDM plunging process is utilized to create annulus **66** and thereby define the inner circumferential wall of outer annular sidewall **62,** the outer circumferential wall of inner annular sidewall **64,** and the inner radial face of base plate **68.** The EDM plunging process may be performed utilizing a tubular or cup-shaped electrode having a wall thickness corresponding to the desired radial width of annulus **66.** Afterwards, an additional cutting process, such as an EDM wire process, may be performed to remove selected regions of resilient body **100** and thereby create outer flexure array **80,** inner flexure array **82,** and arcuate grooves **88**, **90, 92,** and **94.** Notably, during the EDM wire process, the radially aligning flexures of arrays **80** and **82** may be formed simultaneously utilizing an electrode having a sufficient length to penetrate both outer annular sidewall and inner annular sidewall **64.** Radially-aligning grooves **88** and **90** and radially-aligning grooves **92** and **94** may likewise be formed simultaneously utilizing the same or similar EMD wire process.

There has thus been provided embodiments of a nested flexure device having an axially-compact form factor and a relatively large angular ROM. In preferred embodiments, the nested flexure device comprises a monolithic resilient structure in which the inner and outer flexure arrays are formed. Embodiments of single DOF isolator including such an axially-compact flexure device have also been provided. While described above primarily in conjunction with a single DOF, axially-damping isolator, it is emphasized that embodiment of the nested flexure device can be utilized within any application wherein it is desired to provide angular compliancy between mount points, while transmitting axial forces therebetween. In this regard, embodiments of the above-described nested flexure device are well-suited for usage in place of ball joints in instances wherein it is desired to eliminate joints to, for example, reduce stiction and/or to provide superior transmission of low amplitude vibratory forces along the longitudinal axis of the flexure. Finally, the foregoing has also provided embodiments of a method for producing an axially-compact, radially-compliant nested flexure device.

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set-forth in the appended claims.

## Claims

1. An isolator (10) having a working axis (14), comprising:
an isolator body (16); and
a nested flexure device (12) mounted to an end portion of the isolator body, the nested flexure device comprising:
an inner flexure array (82) compliant along first and second perpendicular axes orthogonal to the working axis; and
an outer flexure array (80) compliant along the first and second perpendicular axes, coupled in series with the inner flexure array, and circumscribing at least a portion of the inner flexure array.

2. The isolator (10) of Claim 1 wherein the inner flexure array (82) and the outer flexure array (80) each comprise a plurality of blade flexures circumferentially spaced about the working axis (14) of the isolator.

3. The isolator (10) of Claim 1 wherein any given load path taken through the nested flexure device (12) has a substantially sinusoidal portion extending through the inner flexure array (82) and the outer flexure array (80).

4. The isolator (10) of Claim 1 wherein the inner flexure array (82) and the outer flexure array (80) each comprise:
a first subset of blade flexures oriented to have a higher compliancy along the first axis than along the second axis; and
a second subset of blade flexures oriented to have a higher compliancy along the second axis than along the first axis.

5. The isolator (10) of Claim 1 wherein the nested flexure device (12) further comprises:
an outer annular sidewall (62) in which the outer flexure array (80) is formed; and
an inner annular sidewall (64) in which the inner flexure array (82) is formed, the inner annular sidewall extending around the outer annular sidewall (62).

6. The isolator (10) of Claim 5 wherein the inner annular sidewall (64) and the outer annular sidewall (62) are separated by an annular gap (66), and wherein the nested flexure device (12) further comprises:
an end plate (68) extending across the annular gap (66) to join the inner and outer annular sidewalls (64, 62); and
an axial extension (70) joined to the inner annular sidewall and extending away therefrom in a direction opposite the end plate.

7. The isolator (10) of Claim 1 wherein the nested flexure device (12) comprises a monolithic resilient structure (100) in which the inner flexure array (82) and the outer flexure array (80) are formed.

8. The isolator (10) of Claim 1 wherein the isolator body (16) comprises a tubular end portion in which the nested flexure device (12) is recessed.

9. A nested flexure device (12) having a longitudinal axis (60), comprising:
an inner flexure array (82) compliant along first and second perpendicular axes orthogonal to the longitudinal axis; and
an outer flexure array (80) compliant along the first and second perpendicular axes, coupled in series with the inner flexure array, and circumscribing at least a portion of the inner flexure array.

10. A method for producing a nested flexure device (12), comprising:
providing a monolithic body (100) of resilient material having a longitudinal axis (60), an inner annular sidewall (64) extending around the longitudinal axis, and an outer annular sidewall (62) circumscribing at least a portion of the inner annular sidewall;
forming an inner flexure array (82) in the inner annular sidewall and compliant along first and second perpendicular axes orthogonal to the longitudinal axis; and
forming an outer flexure array (80) in the outer annular sidewall, compliant along the first and second perpendicular axes, and coupled in series with the inner flexure array.
